# EUROPÄISCHE PATENTANMELDUNG

(11) **EP 0 572 072 A2**
(43) Veröffentlichungstag der Anmeldung: **01.12.1993**
(21) Anmeldenummer: 93201441.8
(22) Anmeldetag: 19.05.1993
(51) Int. Cl.: G11B 23/087, G11B 23/50

(54) **Kassette zum Aufnehmen eines Bandes**

(30) Priorität: 27.05.1992 AT 1111/92
(71) Anmelder: Philips Electronics N.V., 5621 BA Eindhoven (NL)
(72) Erfinder: Sonnleitner, Christian, NL-5656 AA Eindhoven (NL)
(74) Vertreter: Cuppens, Hubertus Martinus Maria

(57) **Zusammenfassung**

Eine Kassette (1) zum Aufnehmen eines Bandes (2) mit zwei Wickelkernen (18, 19) zum Aufwickeln des Bandes (2) und mit zwei Bandführungsrollen (25, 26) und mit zwei das Band (2) gegen die Bandführungsrollen (25, 26) drückenden Reinigungspolstern (40, 41) weist zwei zusätzliche Bandführungen (51, 52) auf, die im normalen Betrieb einer Kassette sich außer Bandkontakt vom Band (2) befinden und die nur bei Auftreten einer Bandschlaufe (54) in einem von einem Wickelkern (18, 19) zu einer Bandführungsrolle (25, 26) verlaufenden Bandabschnitt (38, 39) mit diesem Bandabschnitt (38, 39) in Bandkontakt kommen und dann für ein ordnungsgemäßes Führen des einer Bandführungsrolle (25, 26) zugeführten Bandes (2) sorgen.

## Beschreibung

Die Erfindung bezieht sich auf eine Kassette zum Aufnehmen eines Bandes mit einem quaderförmigen Gehäuse, das eine Bodenwand, eine Deckenwand, eine erste Seitenwand, die mit mindestens einer Durchtrittsöffnung zum Durchtritt zu dem Magnetband versehen ist, und drei weitere Seitenwände aufweist, und mit zwei bezüglich der Bedenwand und Deckenwand nebeneinanderliegenden, drehbar gelagerten Wickelkernen zum Aufwickeln des Bandes und mit zwei im Bereich der ersten Seitenwand angeordneten, senkrecht zu der Bodenwand und Deckenwand ausgerichteten, von dem Band je in einem Umschlingungsbereich umschlungenen, drehbar gelagerten Bandführungsrollen, wobei zwischen den beiden Bandführungsrollen ein Bandabschnitt entlang der ersten Seitenwand geführt ist und von jeder Bandführungsrolle je ein weiterer Bandabschnitt zu einem der beiden Wickelkerne weggeführt ist, und mit mindestens einem Reinigungspolster, der von einem im Gehäuse abgestützten Polsterträger getragen ist und der in dem Umschlingungsbereich an einer Bandführungsrolle gegen das um diese Bandführungsrolle herumgeschlungene Band gedrückt ist.

Eine solche Kassette gemäß der im vorstehenden ersten Absatz angeführten Gattung ist beispielsweise aus der EP O 302 974 A1 bekannt. Es handelt sich hierbei um eine sogenannte VHS-Kassette, die praktisch überall im Handel erhältlich ist und als allgemein bekannt bezeichnet werden kann.

Im Falle einer vollkommen fertiggestellten, sogenannten geladenen Kassette besteht das in einer solchen Kassette untergebrachte Band aus einem Magnetband und einem lichtdurchlässigen Vorspannband, wobei das Magnetband an seinen beiden Enden je mit einem lichtdurchlässigen Vorspannbandabschnitt verbunden ist. Bei einer sogenannten ungeladenen Kassette besteht das in dieser Kassette untergebrachte Band nur aus einem Vorspannband, das nachträglich beim Laden der Kassette durchtrennt und in zwei Vorspannbandabschnitte geteilt wird, die danach mit den beiden Enden eines Magnetbandes verbunden werden, das in die Kassette geladen wird.

Beim normalen Betrieb einer vollständig fertiggestellten geladenen Kassette, um auf dem Magnetband Signale aufzuzeichnen oder auf dem Magnetband aufgezeichnete Signale wiederzugeben, wird das Magnetband mit Hilfe einer Antriebseinrichtung angetrieben, die mindestens eine Antriebswelle und eine gegen die Antriebswelle unter Zwischenfügung des Magnetbandes andrückbare Andruckrolle aufweist. In einem solchen normalen Betrieb erfolgt auch häufig ein Stillsetzen des Magnetbandes, wobei dann auch die beiden in der Kassette untergebrachten nebeneinanderliegenden Wickelkerne abgebremst und stillgesetzt werden müssen. Wenn sich auf einem Wickelkern eine große Menge an Magnetband aufgewickelt befindet, sind zum Abbremsen des einen solch großen Bandwickel tragenden Wickelkernes relativ große Bremskräfte erforderlich. Beim Abbremsen eines einen solch großen Bandwickel tragenden Wickelkernes kann daher leicht der Fall eintreten, daß es während eines solchen Bremsvorganges zu einem ungewollten Nachlaufen des Bandwickels kommt, wobei dies dann eine Schlaufenbildung zur Folge hat, bei der in dem weiteren Bandabschnitt zwischen jenem Wickelkern bzw. Bandwickel, von dem das Magnetband vorher abgewickelt wurde, und der diesem Wickelkern bzw. Bandwickel benachbarten Bandführungsrolle eine Bandschlaufe auftritt, die zwischen diesem Bandwickel und der ersten Seitenwand zu liegen kommt. Infolge einer solchen Bandschlaufe hat das Magnetband die Tendenz, aus seiner senkrecht zu der Bodenwand und Deckenwand verlaufenden Lage im Bereich der Bandschlaufe in eine gegenüber diesen beiden Wänden geneigte Lage zu kippen, was beim zusätzlichen Auftreten von elektrostatischen Anziehungseffekten sogar dazu führen kann, daß das Magnetband im Bereich der Bandschlaufe parallel zu der Deckenwand und Bodenwand an einer der beiden Wände anliegend zu liegen kommt. Bei einem nachträglichen neuerlichen Antreiben des Magnetbandes kann infolge der nicht senkrecht zu der Bodenwand und Deckenwand ausgerichteten undefinierten Lage des Magnetbandes in dessen weiterem Bandabschnitt vor der Bandführungsrolle und, aufgrund der Wirkung des im Bereich der Bandführungsrolle gegen das Magnetband gedrückten Reinigungspolsters der Effekt auftreten, daß das Magnetband in axialer Richtung der Bandführungsrolle aus dem gewünschten normalen Bandlauf herauszuwandern beginnt, so daß das Magnetband in axialer Richtung entlang der Bandführungsrolle gleitet. Dies kann an den Endbereichen der Bandführungsrolle, die beispielsweise als Flansche mit gegenüber der eigentlichen Bandführungsrolle größerem Durchmesser ausgebildet sein können, zu Bandbeschädigungen führen, und es kann sogar das Magnetband so weit in axialer Richtung der Bandführungsrolle verstellt werden, daß das Magnetband gänzlich von der Bandführungsrolle abgleitet und zwischen entweder der Bodenwand oder der Deckenwand des Gehäuses der Kassette und dem dieser Wand gegenüberliegenden axialen Endbereich der Bandführungsrolle eingeklemmt und folglich zerstört wird.

Die Erfindung hat sich zur Aufgabe gestellt, die vorstehend angeführten Schwierigkeiten zu vermeiden und bei einer Kassette gemäß der im ersten Absatz angeführten Gattung auch für den Fall, daß nach einem Abbremsen der Wickelkerne in der Kassette eine Bandschlaufenbildung aufgetreten ist, bei einem nachfolgenden neuerlichen Antreiben des Magnetbandes ein unerwünschtes Verstellen desselben in axialer Richtung der Bandführungsrolle, gegen die das Magnetband mit dem Reinigungspolster gedrückt ist, verhindert ist und folglich einer daraus resultierenden Beschädigung bzw. Zerstörung des Magnetbandes vorgebeugt ist. Hierfür ist die Erfindung dadurch gekennzeichnet, daß in dem in Draufsicht auf die Deckenwand und Bodenwand keilförmigen Bereich zwischen einerseits dem von der Bandführungsrolle weggeführten weiteren Bandabschnitt und andererseits dem an diesen weiteren Bandabschnitt angrenzenden, vom Band nicht umschlungenen Umfangsbereich dieser Bandführungsrolle eine senkrecht zu der Bodenwand und Deckenwand ausgerichtete, mit einer von der Bodenwand und Deckenwand verbundene zusätzliche Bandführung vorgesehen ist und daß die Position der zusätzlichen Bandführung in diesem keilförmigen Bereich so gewählt ist, daß die zusätzliche Bandführung im normalen Betrieb der Kassette mit dem weiteren Bandabschnitt sich außer Bandkontakt befindet und nur bei Auftreten einer Bandschlaufe in dem weiteren Bandabschnitt den weiteren Bandabschnitt in seinem unmittelbar vor der Bandführungsrolle befindlichen Bereich im wesentlichen senkrecht zu der Bodenwand und Deckenwand führt. Auf diese Weise ist erreicht, daß von dem von einer Bandführungsrolle, gegen die das Magnetband mit einem Reinigungspolster gedrückt ist, zu dem benachbarten Wickelkern geführten weiteren Bandabschnitt zumindest der unmittelbar an die Bandführungsrolle angrenzende Bereich auch bei Vorliegen einer Bandschlaufe in diesem weiteren Bandabschnitt mit Hilfe der zusätzlichen Bandführung beim neuerlichen Antreiben des Magnetbandes senkrecht zu der Bodenwand und Deckenwand der Kassette geführt ist, so daß das Magnetband von der zusätzlichen Bandführung in einer einwandfreien, senkrecht zu der Bodenwand und Deckenwand verlaufenden Lage zu der Bandführungsrolle hingeführt wird, was zur Folge hat, daß das Magnetband keine Tendenz hat, in axialer Richtung der Bandführungsrolle auszuweichen. Es ist somit auf einfachste Weise erreicht, daß während des Aufsaugens einer solchen Bandschlaufe das Magnetband von der zusätzlichen Bandführung ordnungsgemäß der Bandführungsrolle, gegen die das Magnetband mit dem Reinigungspolster gedrückt wird, zugeführt wird und daher kein Ausweichen des Magnetbandes in axialer Richtung der Bandführungsrolle erfolgt und folglich keine Bandbeschädigung bzw. Zerstörung des Magnetbandes durch die Bandführungsrolle auftreten kann. Ein weiterer Vorteil der zusätzlichen Bandführung besteht darin, daß beim neuerlichen Antreiben des Magnetbandes, bei dem eine eventuell zuvor aufgetretene Bandschlaufe aufgesaugt wird, von der zusätzlichen Bandführung, vor der im Bandlauf die Bandschlaufe liegt, ein zwar kleiner, aber doch wirksamer Gegenzug auf das Magnetband ausgeübt wird, was im Hinblick auf die Erzielung eines definierten Bandlaufes in Bezug auf die der zusätzlichen Bandführung nachfolgende Bandführungsrolle beim neuerlichen Antreiben des Magnetbandes günstig ist. Aufgrund der erfindungsgemäßen Position der zusätzlichen Bandführung ist weiters der Vorteil erhalten, daß im normalen Betrieb einer Kassette, wobei in dem weiteren Bandabschnitt zwischen einer Bandführungsrolle und dem dieser Bandführungsrolle benachbarten Wickelkern keine Bandschlaufe vorliegt, zwischen dem Magnetband und der zusätzlichen Bandführung kein Bandkontakt besteht, so daß durch die zusätzliche Bandführung keine zusätzliche Reibungsbelastung des Magnetbandes auftritt, und daß die zusätzliche Bandführung nur bei Auftreten einer Bandschlaufe mit dem Magnetband in Bandkontakt kommt und damit wirksam wird. Hierdurch wird durch die zusätzliche Bandführung im normalen Betrieb einer Kassette keine zusätzliche Belastung des Magnetbandes verursacht, was im Hinblick auf ein möglichst leistungsarmes Antreiben des Magnetbandes und im Hinblick auf eine möglichst geringe mechanische Belastung des Magnetbandes vorteilhaft ist.

Die zusätzliche Bandführung kann beispielsweise durch eine entweder von der Bodenwand oder von der Deckenwand senkrecht abstehende, im wesentlichen quaderförmige Rippe gebildet sein, die einen senkrecht zur Bodenwand und Deckenwand verlaufenden abgerundeten Bandführungsbereich aufweist. Als besonders vorteilhaft hat sich aber erwiesen, wenn die zusätzliche Bandführung durch einen stationären zylindrischen Bandführungsstift gebildet ist. Dies ist im Hinblick auf eine möglichst einfache, raumsparende und materialsparende Ausbildung vorteilhaft.

Als besonders vorteilhaft hat sich erwiesen, wenn in dem keilförmigen Bereich zwischen der zusätzlichen Bandführung und der Bandführungsrolle sowohl eine mit der Bodenwand verbundene und gegenüber dieser erhabene, den weiteren Bandabschnitt kreuzende Bandführungsrippe als auch eine mit der Deckenwand verbundene und gegenüber dieser erhabene, den weiteren Bandabschnitt kreuzende weitere Bandführungsrippe vorgesehen sind, die in Draufsicht auf die Deckenwand und Bodenwand im wesentlichen sich überdeckend angeordnet sind. Mit Hilfe der beiden Bandführungsrippen wird eine zusätzliche Stabilisierung des Magnetbandes in dessen Höhenlage in Relation zur Bandführungsrolle erreicht, weil sie einem Ausweichen des Magnetbandes in axialer Richtung der Bandführungsrolle entgegenwirken, was im Hinblick auf einen definierten Bandlauf in Relation zur Bandführungsrolle vorteilhaft ist.

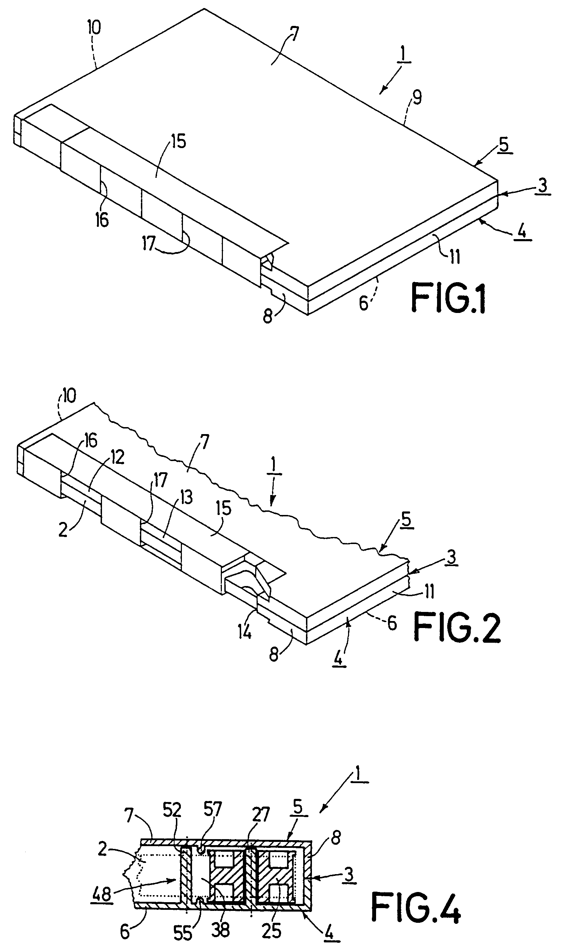

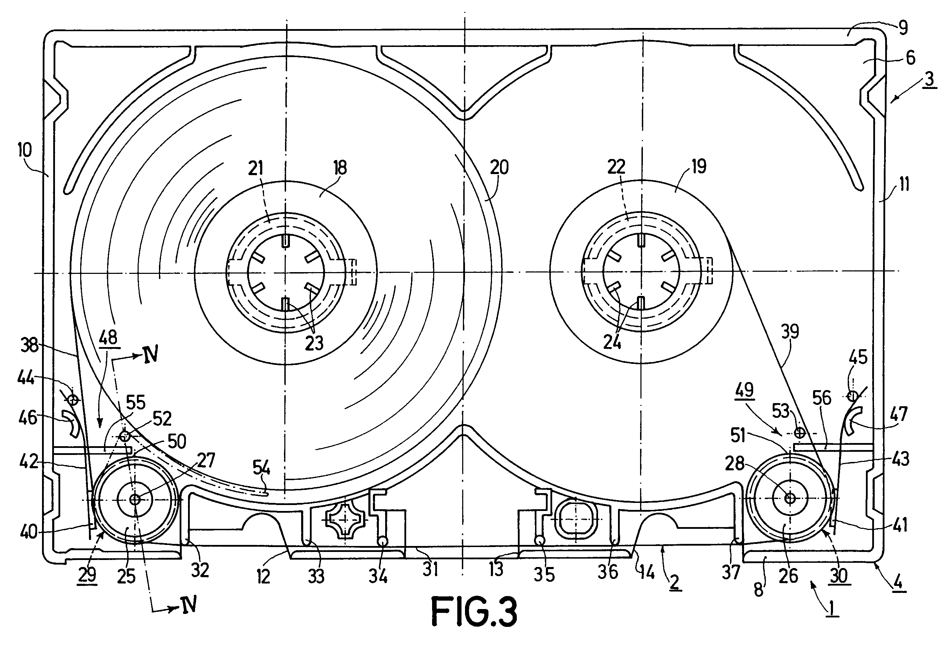

Die Erfindung wird im folgenden anhand eines in der Zeichnung dargestellten Ausführungsbeispieles näher beschrieben, auf das die Erfindung jedoch nicht beschränkt sein soll. Die Fig. 1 zeigt schematisch in Schrägansicht eine Kassette, die einen längs einer ersten Seitenwand zwischen einer Schließstellung und einer Offenstellung verschiebbaren Verschlußteil zum Verschließen von in einer ersten langen Seitenwand vorgesehenen Durchtrittsöffnung aufweist, wobei der Verschlußteil in seiner Schließstellung befindlich dargestellt ist. Die Fig. 2 zeigt auf analoge Weise wie die Fig. 1 die Kassette gemäß Fig. 1, wobei ein Teil derselben weggerissen ist und wobei der Verschlußteil in seiner Offenstellung befindlich dargestellt ist. Die Fig. 3 zeigt in Draufsicht in gegenüber der natürlichen Größe etwa doppelter Größe eine bodenseitige wannenförmige Gehäusehälfte der Kassette gemäß den Figuren 1 und 2, in die zwei Wickelkerne samt dem zwischen denselben verlaufenden Magnetband sowie zwei Bandführungsrollen und zwei von je einem Polsterträger getragene Reinigungspolster eingesetzt sind. Die Fig. 4 zeigt in einem Schnitt gemäß der Linie IV-IV in Fig. 3 ein Detail der Kassette gemäß den Figuren 1 und 2.

Die Figuren 1 und 2 zeigen eine Kassette 1 zum Aufnehmen eines Magnetbandes 2. Die Kassette 1 weist ein quaderförmiges Gehäuse 3 auf, das aus einer bodenseitigen wannenförmigen Gehäusehälfte 4 und einer deckenseitigen wannenförmigen Gehäusehälfte 5 besteht. Das Gehäuse 3 weist eine in den Figuren 1 und 2 nicht sichtbare Bodenwand 6, eine Deckenwand 7, eine erste lange Seitenwand 8, eine dieser gegenüberliegende zweite lange Seitenwand 9, die in den Figuren 1 und 2 ebenfalls nicht sichtbar ist, eine erste kurze Seitenwand 10, die in den Figuren 1 und 2 ebenfalls nicht sichtbar ist, und eine zweite kurze Seitenwand 11 auf. In der ersten langen Seitenwand 8 sind drei Öffnungen 12, 13 und 14 vorgesehen. Die Öffnung 12 erstreckt sich dabei auch in die Bodenwand 6 des Gehäuses 3 der Kassette 1. Die Öffnung 14 erstreckt sich dabei zusätzlich in die Bodenwand 6 und auch in die Deckenwand 7 des Gehäuses 3 der Kassette 1. Die Öffnungen 12, 13 und 14 bilden Durchtrittsöffnungen zum Durchtritt zu dem Magnetband 2 in der Kassette 1. Zum Verschließen der Durchtrittsöffnungen 12, 13 und 14 weist die Kassette 1 einen im Querschnitt im wesentlichen U-förmigen Verschlußteil 15 aus Blechmaterial auf, der zwischen einer in Fig. 1 dargestellten Schließstellung und einer in Fig. 2 dargestellten Offenstellung verschiebbar am Gehäuse 3 der Kassette 1 geführt ist und an dem eine nicht dargestellte Rückstellfeder angreift, die danach trachtet, den Verschlußteil 15 in seiner in Fig. 1 dargestellten Schließstellung zu halten. In dem Verschlußteil 15 sind zwei Öffnungen 16 und 17 vorgesehen, durch die hindurch bei in seiner Offenstellung befindlichem Verschlußteil 15 die Durchtrittsöffnungen 12 und 13 in der ersten langen Seitenwand 8 des Gehäuses 3 der Kassette 1 zugänglich sind.

Wie aus Fig. 3 ersichtlich ist, sind in der Kassette 1 gemäß den Figuren 1 und 2 zwei bezüglich der Bodenwand 6 und der Deckwand 7 nebeneinanderliegende, drehbar gelagerte Wickelkerne 18 und 19 vorgesehen, wobei in dem in Fig. 3 dargestellten Zustand das Magnetband 2 zur Gänze auf einen auf den Wickelkern 18 aufgewickelten Bandwickel 20 aufgewickelt ist. An seinen beiden Enden ist das Magnetband 2 je mit einem nicht dargestellten Vorspannbandabschnitt verbunden, die auf nicht näher dargestellte Weise mit den Wickelkernen 18 und 19 verbunden sind. Zum drehbaren Lagern der beiden Wickelkerne 18 und 19 sind sowohl von der Bodenwand 6 als auch von der Deckenwand 7 abstehende, im wesentlichen ringförmige Lagerrippen vorgesehen, wobei die in der bodenseitigen Gehäusehälfte 4 vorgesehenen Lagerrippen in Fig. 3 mit den Bezugszeichen 21 und 22 versehen sind. Die Wickelkerne 18 und 19, die ebenfalls im wesentlichen ringförmig ausgebildet sind, weisen in ihrem Innenbereich nach innen abstehende stiftförmige Fortsätze 23 und 24 auf, die zum Zusammenwirken mit Wickeldornen eines zum Zusammenwirken mit der Kassette 1 ausgebildeten Aufzeichnungs- und Wiedergabegerätes vorgesehen sind.

Die Kassette 1 weist weiters zwei im Bereich der ersten langen Seitenwand 8 angeordnete, senkrecht zu der Bodenwand 6 und der Deckenwand 7 ausgerichtete Bandführungsrollen 25 und 26 auf. Die Bandführungsrollen 25 und 26 sind je auf einem von der Bodenwand 6 senkrecht abstehenden Lagerstift 27 bzw. 28 drehbar gelagert. Jede der beiden Bandführungsrollen 25 und 26 ist von dem Magnetband 2 je in einem Umschlingungsbereich 29 bzw. 30 umschlungen. Zwischen den beiden Bandführungsrollen 25 und 26 ist ein Bandabschnitt 31 des Magnetbandes 2 entlang der ersten lagen Seitenwand 8 geführt. Hierbei sind zusätzlich zu den beiden Bandführungsrollen 25 und 26 zur Führung des Bandabschnittes 31 von der Bodenwand 6 der Gehäusehälfte 4 senkrecht abstehende Führungsrippen 32 und 33 und Führungsstifte 34 und 35 sowie weitere Führungsrippen 36 und 37 vorgesehen. Von jeder der beiden Bandführungsrollen 25 und 26 ist je ein weiterer Bandabschnitt 38 bzw. 39 zu einem der beiden Wickelkerne 18 bzw. 19 weggeführt, wobei jeder der beiden weiteren Bandabschnitte 38 bzw. 39 zu dem jeweils auf einem Wickelkern 18 bzw. 19 befindlichen Bandwickel hin verläuft.

Weiters sind in der Kassette 1 zwei Reinigungspolster 40 und 41 untergebracht, die je von einem im Gehäuse 3, und zwar in der bodenseitigen Gehäusehälfte 4 abgestützten Polsterträger 42 bzw. 43 getragen sind. Die beiden Polsterträger 42 und 43 sind dabei auf besonders einfache Weise durch je eine Blattfeder gebildet, die an einem Ende zwischen ein stiftförmiges Gegenlager 44 bzw. 45 und ein bogenförmiges Gegenlager 46 bzw. 47 eingesteckt sind und die an ihren freien Enden je den Reinigungspolster 40 bzw. 41 tragen, der beispielsweise durch Kleben mit der Blattfeder 42 bzw. 43 verbunden ist. Die Gegenlager 44, 45, 46 und 47 sind einstückig mit der Bodenwand 6 verbunden und stehen von derselben senkrecht ab. Die Reinigungspolster 40 und 41 bestehen beispielsweise auf einem filzartigen Material oder einem geflockten Material. Die beiden Reinigungspolster 40 und 41 sind je in dem Umschlingungsbereich 29 bzw. 30 an einer Bandführungsrolle 25 bzw. 26 gegen das um diese Bandführungsrolle 25 bzw. 26 herumgeschlungene Magnetband 2 gedrückt.

Wie aus Fig. 3 ersichtlich ist, ist bei der vorliegenden Kassette 1 in dem in Draufsicht auf die Deckenwand 7 und Bodenwand 6 keilförmigen Bereich 48 bzw. 49 zwischen einerseits dem von der Bandführungsrolle 25 bzw. 26, in deren Umschlingungsbereich 29 bzw. 30 der Reinigungspolster 40 bzw. 41 gegen das Magnetband 2 gedrückt ist, weggeführten weiteren Bandabschnitt 38 bzw. 39 und andererseits dem an diesen weiteren Bandabschnitt 38 bzw. 39 angrenzend, vom Magnetband 2 nicht umschlungenen Umfangsbereich 50 bzw. 51 dieser Bandführungsrolle 25 bzw. 26 eine senkrecht zu der Bodenwand 6 und der Deckenwand 7 ausgerichtete, zusätzliche Bandführung 52 bzw. 53 vorgesehen. Die Position der zusätzlichen Bandführung 52 bzw. 53 in dem keilförmigen Bereich 48 bzw. 49 ist hierbei vorteilhafterweise so gewählt, daß die zusätzliche Bandführung 52 bzw. 53 im normalen Betrieb der Kassette 1 mit dem weiteren Bandabschnitt 38 bzw. 39 sich außer Bandkontakt befindet, wie dies auch aus Fig. 3 klar ersichtlich ist. Nur beim Auftreten einer Bandschlaufe 54, wie eine in Fig. 3 mit einer strichpunktierten Linie angedeutet ist, kommt der weitere Bandabschnitt 38 bzw. 39 mit der zusätzlichen Bandführung 52 bzw. 53 in Bandkontakt, und in diesem Fall führt die zusätzliche Bandführung 52 bzw. 53 den weiteren Bandabschnitt 38 bzw. 39 in seinem unmittelbar vor der Bandführungsrolle 25 bzw. 26 befindlichen Bereich senkrecht zu der Bodenwand 6 und der Deckenwand 7. Die zusätzlichen Bandführungen 52 und 53 sind auf besondere einfache Weise je durch einen stationären zylindrischen Bandführungsstift gebildet.

Wie aus den Figuren 3 und 4 ersichtlich ist, sind je in dem keilförmigen Bereich 48 bzw. 49 zwischen der zusätzlichen Bandführung 52 bzw. 53 und der Bandführungsrolle 25 bzw. 26 sowohl eine mit der Bodenwand 6 verbundene und gegenüber dieser erhabene, den weiteren Bandabschnitt 38 bzw. 39 kreuzende Bandführungsrippe 55 bzw. 56 als auch eine mit der Deckenwand 7 verbundene und gegenüber dieser erhabene, den weiteren Bandabschnitt 38 bzw. 39 kreuzende weitere Bandführungsrippe vorgesehen, von denen nur die Bandführungsrippe 57 in Figur 4 dargestellt ist. Die jeweils übereinanderliegenden Bandführungsrippen sind dabei in Draufsicht auf die Deckenwand 7 und Bodenwand 6 sich überdeckend angeordnet.

Durch das Vorsehen der zusätzlichen Bandführungen im Bereich der Bandführungsrollen ist auf besonders einfache Weise erreicht, daß zumindest der an eine Bandführungsrolle angrenzende Bereich des zu einem Wickelkern geführten weiteren Bandabschnittes mit Hilfe der zusätzlichen Bandführung bei Vorliegen einer Bandschlaufe in diesem weiteren Bandabschnitt beim neuerlichen Antreiben des Magnetbandes, bei dem die Bandschlaufe aufgesaugt wird, senkrecht zu der Bodenwand und der Deckwand der Kassette geführt ist, so daß das Magnetband von der zusätzlichen Bandführung in einer einwandfreien, senkrecht zu der Bodenwand und der Deckenwand verlaufenden Lage zu der Bandführungsrolle hingeführt wird, was zur Folge hat, daß das Magnetband keine Tendenz hat, in axialer Richtung der Bandführungsrolle auszuweichen. Es ist somit gewährleistet, daß während des Aufsaugens einer Bandschlaufe das Magnetband von der zusätzlichen Bandführung ordnungsgemäß der Bandführungsrolle, gegen die das Magnetband mit einem Reinigungspolster gedrückt wird, zugeführt wird und daher kein Ausweichen des Magnetbandes in axialer Richtung der Bandführungsrolle folgt. Beim neuerlichen Antreiben des Magnetbandes, bei dem eine zuvor aufgetretene Bandschlaufe aufgesaugt wird, wird von der zusätzlichen Bandführung, vor der im Bandlauf die Bandschlaufe liegt, ein zwar kleiner, aber doch wirksamer Gegenzug auf das Magnetband ausgeübt, was im Hinblick auf die Erzielung eines definierten Bandlaufes im Bezug auf die der zusätzlichen Bandführung folgende Bandführungsrolle beim neuerlichen Antreiben des Magnetbandes vorteilhaft ist. Die zusätzliche Bandführung übt aufgrund der für sie gewählten Position im normalen Betrieb einer Kassette keine zusätzliche Reibungsbelastung auf das Magnetband aus, was ebenfalls vorteilhaft ist. Durch das Vorsehen der zwischen jeder zusätzlichen Bandführung und der ihr benachbarten Bandführungsrolle vorgesehenen, gegenüber der Deckenwand bzw. der Bodenwand erhabenen Bandführungsrippen wird weiters vorteilhafterweise einem Ausweichen des Magnetbandes in axialer Richtung der Bandführungsrollen entgegengewirkt, was im Hinblick auf einen definierten Bandlauf in Relation zu jeder Bandführungsrolle vorteilhaft ist.

Die Erfindung ist nicht auf eine wie vorstehend beschriebene und in den Zeichnungen dargestellt Kassette beschränkt, sondern kann auch bei Kassetten mit einem anderen Detailaufbau zum Einsatz kommen.

## Patentansprüche

1. Kassette (1) zum Aufnehmen eines Bandes (2) mit einem quaderförmigen Gehäuse (3), das eine Bodenwand (6), eine Deckenwand (7), eine erste Seitenwand (8), die mit mindestens einer Durchtrittsöffnung (12, 13, 14) zum Durchtritt zu dem Magnetband (2) versehen ist, und drei weitere Seitenwände (9, 10, 11) aufweist, und mit zwei bezüglich der Bodenwand (6) und Deckenwand (7) nebeneinanderliegenden, drehbar gelagerten Wickelkernen (18, 19) zum Aufwickeln des Bandes (2) und mit zwei im Bereich der ersten Seitenwand (8) angeordneten, senkrecht zu der Bodenwand (6) und Deckenwand (7) ausgerichteten, von dem Band (2) je in einem Umschlingungsbereich (29, 30) umschlungenen, drehbar gelagerten Bandführungsrollen (25, 26), wobei zwischen den beiden Bandführungsrollen (25, 26) ein Bandabschnitt (31) entlang der ersten Seitenwand (8) geführt ist und von jeder Bandführungsrolle (25, 26) je ein weiterer Bandabschnitt (38, 39) zu einem der beiden Wickelkerne (18, 19) weggeführt ist, und mit mindestens einem Reinigungspolster (40, 41), der von einem im Gehäuse (3) abgestützten Polsterträger (42, 43) getragen ist und der in dem Umschlingungsbereich (29, 30) an einer Bandführungsrolle (25, 26) gegen das um diese Bandführungsrolle (25, 26) herumgeschlungene Band (2) gedrückt ist, dadurch gekennzeichnet, daß in dem in Draufsicht auf die Deckenwand (7) und Bodenwand (6) keilförmigen Bereich (48, 49) zwischen einerseits dem von der Bandführungsrolle (25, 26) weggeführten weiteren Bandabschnitt (38, 39) und andererseits dem an diesen weiteren Bandabschnitt (38, 39) angrenzenden, vom Band (2) nicht umschlungenen Umfangsbereich (50, 51) dieser Bandführungsrolle (25, 26) eine senkrecht zu der Bodenwand (6) und Deckenwand (7) ausgerichtete, mit einer von der Bodenwand (6) und Deckenwand (7) verbundene zusätzliche Bandführung (52, 53) vorgesehen ist und daß die Position der zusätzlichen Bandführung (52, 53) in diesem keilförmigen Bereich (48, 49) so gewählt ist, daß die zusätzliche Bandführung (52, 53) im normalen Betrieb der Kassette (1) mit dem weiteren Bandabschnitt (38, 39) sich außer Bandkontakt befindet und nur bei Auftreten einer Bandschlaufe (54) in dem weiteren Bandabschnitt (38, 39) den weiteren Bandabschnitt (38, 39) in seinem unmittelbar vor der Bandführungsrolle (25, 26) befindlichen Bereich im wesentlichen senkrecht zu der Bodenwand (6) und Deckenwand (7) führt.

2. Kassette nach Anspruch 1, dadurch gekennzeichnet, daß die zusätzliche Bandführung (52, 53) durch einen stationären zylindrischen Bandführungsstift gebildet ist. (Fig. 3, 4)

3. Kassette nach Anspruch 1 oder 2, dadurch gekennzeichnet, daß in dem keilförmigen Bereich (48, 49) zwischen der zusätzlichen Bandführung (52, 53) und der Bandführungsrolle (25, 26) sowohl eine mit der Bodenwand (6) verbundene und gegenüber dieser erhabene, den weiteren Bandabschnitt (38, 39) kreuzende Bandführungsrippe (55, 56) als auch eine mit der Deckenwand (7) verbundene und gegenüber dieser erhabene, den weiteren Bandabschnitt (38, 39) kreuzende weitere Bandführungsrippe (57) vorgesehen sind, die in Draufsicht auf die Deckenwand (7) und Bodenwand (6) im wesentlichen sich überdeckend angeordnet sind. (Fig. 3, 4)
